# EUROPÄISCHE PATENTSCHRIFT

(11) **EP 0 535 320 B1**
(45) Veröffentlichungstag und Bekanntmachung des Hinweises auf die Patenterteilung: **10.04.1996**
(21) Anmeldenummer: 92112636.3
(22) Anmeldetag: 23.07.1992
(51) Int. Cl.: C02F 11/08, C02F 1/46

(54) **Oxidation von Stoffen in Wasser mittels elektrolytisch in situ erzeugtem Sauerstoff**
Oxidation of substances in water with electrolytically in situ produced oxygen
Oxydation de substances dans l'eau avec de l'oxygène fabriqué in situ par voie électrolytique

(30) Priorität: 04.10.1991 DE 4132915
(43) Veröffentlichungstag der Anmeldung: 07.04.1993
(73) Patentinhaber: Brunner, Gerd, Prof. Dr.-Ing., D-21075 Hamburg (DE)
(72) Erfinder: Brunner, Gerd, Prof. Dr.-Ing., D-21075 Hamburg (DE)
(74) Vertreter: Fleck, Thomas, Dr. Dipl.-Chem.

(56) Entgegenhaltungen:
- EP-A- 0 228 755
- DE-A- 2 944 282
- US-A- 4 581 105

## Beschreibung

Die Erfindung betrifft ein Verfahren nach dem Oberbegriff des Anspruches.

Ein derartiges Verfahren ist aus der DE-OS 29 44 282 bekannt.
Dabei werden bekanntermaßen Temperaturen zwischen 150 und 325°C und Drücke zwischen 20 und 200 bar angewendet. Nach der dortigen Lehre wird das mit Sauerstoff versetzte Wasser von den Anodenräumen in einen Druckbehälter geleitet.

Unter diesen Reaktionsbedingungen werden bei wesentlicher Mitwirkung des Wassers die organischen Verbindungen zu Kohlendioxid und Wasser abgebaut. Falls die Verbindungen noch andere Elemente wie Schwefel, Chlor oder Phosphor enthalten, werden diese zu den entsprechenden anorganischen Säuren umgesetzt. Aus Stickstoffverbindungen entsteht in der Regel Stickstoff, aus Aminen entsteht Ammoniak. Aus anorganischen Verbindungen entstehen die entsprechenden anorganischen Säuren, also aus Schwefelverbindungen Schwefelsäure.

Bei vielen Stoffklassen verläuft die Oxidationsreaktion erst bei Temperaturen oberhalb 280°C und bei Drücken um 200 bar ausreichend schnell ab. Deshalb wird auch versucht, die Oxidationsreaktin zu katalysieren (Beispiel: BAYER LOPROX-Verfahren) oder nur soweit durchzuführen, daß die Abbaubarkeit in einer biologischen Kläranlage gegeben ist.

Halogenierte aromatische Verbindungen wie z.B. Hexachlorbenzol, Dichlorbenzol und PCBs benötigen Temperaturen > 320 °C und entsprechende Drücke für eine effektive Oxidation in Wasser.

Wichtige Grenzbedingungen für die Naßoxidation sind dadurch gegeben, daß die Reaktion in der flüssigen Phase oder einer dichten überkritischen Phase stattfindet. Es müssen also Bedingungen aufrecht erhalten werden, die im unterkritischen Bereich (T < 374 °C) den Bestand einer flüssigen Phase garantieren. Dies ist unter dem Aspekt zu sehen, daß die eintretende komprimierte Oxidationsluft sich mit Wasser sättigt und unter den Bedingungen der Naßoxidation die Aufnahmekapazität der Luft für Wasser beträchtlich ist. Im Falle des Austrocknens des Reaktors muß auch noch mit Verkrustungen durch eine evtl. vorhandene Salzfracht gerechnet werden. Im überkritischen Bereich ist die Gefahr des Austrocknens nicht gegeben, da die Reaktion in der homogenen überkritischen Phase (die auch als gasförmig bezeichnet wird) abläuft. Allerdings nimmt die Lösefähigkeit des Wassers für anorganische Salze mit zunehmender Temperatur stark ab, so daß hier ebenfalls die Gefahr von Salzausfällungen und die Möglichkeit von Verkrustungen besteht. Die biologische Reinigung, wobei die biologische Abbaubarkeit der Inhaltsstoffe vorausgesetzt wird, wird im Bereich geringer Schadstoffbelastungen und großer zu entsorgender Mengenströme eingesetzt. Die Verbrennung benötigt für eine energetisch ökonomische Betriebsweise eine hohe Schadstoffkonzentration. Die je Ofen zu entsorgende Wassermenge ist dagegen begrenzt . Das Verfahren der Naßoxidation findet seinen Einsatz im Bereich mittlerer Schadstoffkonzentrationen, bevorzugt auch bei toxischen und biologisch nicht abbaubaren Stoffen.

Mit der Naßoxidation im überkritischen Bereich des Wassers (T = 374 - 650 °C), bekannt auch als MODAR-Verfahren oder SCWO (Supercritical Water Oxidation) verläuft der Oxidationsprozeß noch schneller und vollständiger als unter den typischen Bedingungen der Naßoxidation (T = 150 - 320 °C). Bei der Oxidation mit Sauerstoff in einer Atmosphäre aus überkritischem Wasser verlaufen die chemischen Umsetzungen global gesehen wie bei einer Verbrennung. Jedoch ist die Art und Weise, in der die Oxidation durchgeführt wird sehr verschieden. Die überkritische Wasseroxidation wird bei Temperaturen von etwa 500 bis 650 °C durchgeführt. Die Reaktionszeit liegt im Bereich von Minuten, während bei der Verbrennung Sekunden bzw. Bruchteile von Sekunden charakteristisch für die in den Flammen nur sehr schwer kontrollierbaren Reaktionen zu Verfügung stehen.

Unter atmosphärischem Druck ist es nicht möglich, organische Stoffe bei Temperaturen zwischen 400 und 650 °C zu oxidieren. Es bilden sich gasförmige Produkte und ein koksartiger fester Rückstand, der nur bei sehr hohen Temperaturen verbrannt oder mit Wasserdampf und Luft oxidiert werden kann Die Oxidation der organischen Stoffe unter den relativ milden Bedingungen der Temperaturen zwischen 400 und 650 °C wird durch den hohen Druck und die Gegenwart von Wasser als Reaktionsmedium ermöglicht. Wasser ist oberhalb von 374 °C und einem Druck von 225 bar ein überkritisches Fluid. In diesem Zustand wird überkritisches Wasser zu einem ausgezeichneten Lösungsmittel für organische Stoffe und für Gase. Darüber hinaus reagiert überkritisches Wasser mit den organischen Komponenten und bildet (reformiert) sie zu kleinen Molekülen um, ohne daß eine Koksbildung stattfindet. Diese kleineren Moleküle werden im überkritischen Wasser mit Sauerstoff leicht oxidiert.

Die Naßoxidation kann so weit geführt werden, daß die ursprünglich vorhandenen organischen Komponenten vollständig zerstört sind. Dieser Weg wird vor alllem bei toxischen Komponenten beschritten werden. Die Abbauprodukte Kohlendioxid und Stickstoff verlassen den Prozeß gasförmig, während die anderen Produkte, auch NH₃, unter Berücksichtigung der Verteilungskoeffizienten im Abwasserstrom gelöst bleiben. Das Abgas des Prozesses ist im Gegensatz zu Abgas aus Verbrennungsanlagen frei von Staub, nitrosen Gasen und Schwefeldioxid.
Die flüssige Phase kann bei Vorliegen von niedermolekularen Verbindungen leicht über die biologische Kläranlage geführt werden. Ein weiterer Produktstrom der Naßoxidation kann bei entsprechendem Ausgangsmaterial ein Feststoff sein, der aus Metalloxiden und schwerlöslichen Salzen wie Sulfaten, Phosphaten und Silikaten besteht.

Eine Übersicht zu den durchgeführten Verfahren ist in nachfolgender Tabelle angegeben. Die Literaturhinweise folgen nach der Tabelle.

| OXIDATIONSVERFAHREN IN WASSER | | | | |
|---|---|---|---|---|
| VERFAHREN/FIRMA | ZIELSETZUNG | ZUSTANDSBEDINGUNGEN | | VERWEILZEIT |
| | | T [°C] | P [bar] | h |
| LOPROX/BAYER | ABWASSERVORREINIGUNG (Katalys.) | 120 - 200 | 3 - 20 | < 3 |
| CIBA-GEIGY | REINIGUNG VON PROZEBABWÄSSERN | 250 - 310 | 60 - 200 | > 1 |
| | KONDITIONIERUNG VON KLÄRSCHLAMM | 200 - 250 | 30 - 60 | > 1 |
| ZIMPRO | ABBAU VON ORGANISCHEN SCHADSTOFFEN | 220 - 320 | 60 - 120 | 1 - 3 |
| MODAR | TOTALABBAU VON SCHADSTOFFEN | 620 | 230 - 250 | < 1 min |

### Literaturhinweise:

Übersicht zur Oxidation in Wasser:
H. Perkow, R. Steiner, H. Vollmüller: Chem.-Ing.-Tech. 52(1980) Nr. 12, S. 943 - 951,
M. Modell: Supercritical Water Oxidation; in: Standard Handbook of Hazardous Waste Treatment and Disposal, Hrsg.: H.W. Friedmann, Kap. 8.11.

### LOPROX:

O. Horak: Chem.-Ing.-Tech. 62 (1990) Nr. 7, S. 555 - 557,
K. Holzer: Umwelt 21(1991) Nr. 4, S. 179 - 181.

### CIBA-GEIGY:

J. Voigt: Naßoxidation. Vortrag SIA-Tagung, 11. 05. 1987, Basel

### ZIMPRO:

M.J. Dietrich, T.L. Randall, P.J. Carmey: Environmental Progress 4(1985) Nr. 3, S. 171 - 177,
US Patent 2 665 249, (27. 03. 1950); Erfinder: J. Zimmermann.

### MODAR:

H.E. Barner, C.Y. Huang, T. Johnson, M.A. Martch, W.R Killilea: Supercritical Water Oxidation: An Emerging Technology; Vortrag ACHEMA 1991, 9.6.1991,
Frankfurt,
US Patent 4 822 497 (18.04.1989),
US Patent 4 338 199 (15.11.1988 und 6.7.1982), Erfinder: M. Modell,
Deutsche Offenlegungsschrift DE 31 18 348 A1 vom 3.6.1982 (Anmeldung 8.5.1981).

Eine Naßoxidationsanlage besteht aus nur wenigen Komponenten. Das Abwasser wird in einem Sammeltank gelagert, ggf. gemischt und dann mittels einer Hochdruckpumpe über einen Wärmetauscher in den Reaktor gefördert. Die erforderliche Oxidationsluft wird aus der Umgebung angesaugt, auf den Reaktionsdruck komprimiert und dem Abwasserstrom zugemischt. Die exotherme Abbaureaktion der Schadstoffe läuft in einem Reaktor ab. Das durch die Oxidationsreaktion erwärmte Abwasser-/Gasgemisch verläßt den Kopf des Reaktors und gibt seinen Wärmeinhalt in dem Wärmetauscher an den Rohabwasserstrom ab, was eine autotherme Fahrweise ermöglicht. Gas- und Flüssigphase werden getrennt und entspannt und evtl. nachbehandelt. Eine Oxidation im überkritischen Wasser hat als Anlage einen vergleichbaren Aufbau wie eine Naßoxidationsanlage.

Bei der Oxidation von Stoffen in wässeriger Umgebung ist das Bereitstellen und das Heranbringen des Sauerstoffs als Oxidationsmittel an die umzusetzenden Moleküle ein Problem. Bei großen Anlagen ist die Verdichtung der Luft ein wesentlicher Kostenfaktor. Darüber hinaus ist molekularer Sauerstoff weit weniger wirksam als das Sauerstoffatom, das z.B. von Sauerstoff liefernden Verbindungen wie Wasserstoffperoxid abgespalten wird.

Es wurde nunmehr gefunden, daß der bei elektrolytischer Zersetzung entstehende Sauerstoff unmittelbar in der Reaktionszone erzeugt werden kann, wobei gleichzeitig überkritische Bedingungen der Wasseroxidation eingesetzt werden.

Das Oxidationsverfahren nach dieser Erfindung läuft wie folgt ab. Die zu behandelnden Stoffe werden der Anlage direkt zugeführt, in der Regel jedoch in einem Sammeltank gelagert, ggf. gemischt und dann mittels einer Hochdruckpumpe in den Hochdruckteil der Anlage gefördert. Mit einem Wärmetauscher wird dieser Stoffstrom auf nahezu kritische Temperatur des Wassers (T < 374°C) erhitzt und mit dem Kreislaufwasser in der erforderlichen Menge gemischt. Anschließend wird das Reaktionsgemisch in die Elektrolysezone gefördert, in der mittels elektrischem Strom eine Wasserelektrolyse des Reaktionsgemisches stattfindet. Die Verweilzeit in der Elektrolysezone wird dem Sauerstoffbedarf der Oxidationsreaktionen angepaßt. Der entstehende Sauerstoff setzt die Oxidationsreaktionen in Gang. Durch die exothermen Oxidationsreaktionen erwärmt sich das Reaktionsgemisch auf überkritische Temperatur in den Temperaturbereich bis etwa 630°C bei einem Druck zwischen 200 - 300 bar. Die Endtemperatur wird so lange gehalten, bzw. die Verweilzeit des Reaktionsgemisches im Reaktor wird so eingestellt, daß der gewünschte oxidative Abbau der eingebrachten Verbindungen stattgefunden hat. Die Höhe der Endtemperatur hängt von der Konzentration der zu oxidierenden Verbindungen und dem gewünschten Abbaugrad ab. Das durch die Oxidationsreaktion erwärmte gasförmige Gemisch verläßt den Reaktor und gibt seinen Wärmeinhalt in dem Wärmetauscher an den Eingangsstrom ab, was eine autotherme Fahrweise ermöglicht. Gas- und Flüssigphase werden getrennt und entspannt und evtl. nachbehandelt.

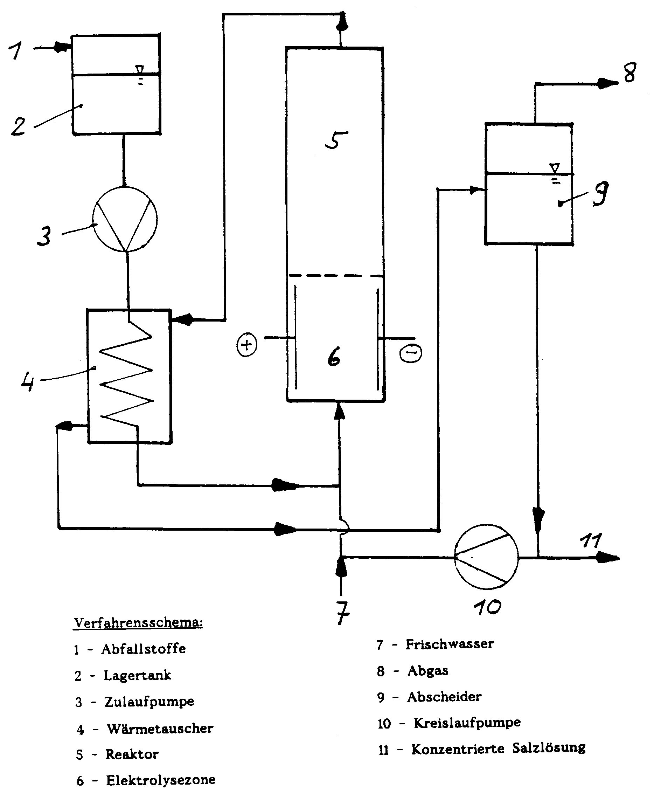

## Patentansprüche

1. Verfahren zur Oxidation von organischen Stoffen mit Sauerstoff in wässriger Umgebung, bei dem der Sauerstoff durch Elektrolyse unter den Bedingungen der sog. Naßoxidation bei erhöhtem Druck erzeugt wird, dadurch gekennzeichnet, daß der Sauerstoff unmittelbar in der Reaktionszone unter den Bedingungen der überkritischen Wasseroxidation (374°C bis 650°C) im Druckbereich von 200 bis 300 bar erzeugt wird.

## Claims

1. Process for the oxidation of organic substances with oxygen in an aqueous environment, in which the oxygen is produced by electrolysis under so-called wet oxidation conditions under elevated pressure, characterized in that the oxygen is produced directly in the reaction zone under the conditions of supercritical water oxidation (374 to 650°C) in the pressure range 200 to 300 bar.

## Revendications

1. Procédé d'oxydation de substances organiques par l'oxygène dans un environnement aqueux, dans lequel l'oxygène est produit par électrolyse dans les conditions de "l'oxydation humide" sous haute pression, caractérisé en ce que l'oxygène est produit directement dans la zone réactionnelle dans les conditions de l'oxydation supercritique de l'eau (374°C à 650°C) dans le domaine de pressions de 200 à 300 bars.
